# EUROPEAN PATENT APPLICATION

(11) **EP 4 512 786 A1**
(43) Date of publication of application: **26.02.2025**
(21) Application number: 22938012.6
(22) Date of filing: 29.04.2022
(51) Int. Cl.: C03C 25/465, C03C 25/16, C03C 25/328

(54) **GLASS FIBER IMPREGNATING COMPOUND AND PREPARATION METHOD THEREFOR, GLASS FIBER PRODUCT, AND APPLICATION**

(30) Priority: 20.04.2022 CN 202210415238
(71) Applicant: Jushi Group Co., Ltd., Tongxiang, Zhejiang 314500 (CN)
(72) Inventor: YANG, Guoming, Tongxiang, Zhejiang 314500 (CN); XU, Shengjie, Tongxiang, Zhejiang 314500 (CN); FEI, Qifeng, Tongxiang, Zhejiang 314500 (CN); YAO, Yaoping, Tongxiang, Zhejiang 314500 (CN); ZHU, Zhongming, Tongxiang, Zhejiang 314500 (CN); FAN, Liang, Tongxiang, Zhejiang 314500 (CN)
(74) Representative: Lavoix
(86) International application number: PCT/CN2022/090352
(87) International publication number: WO 2023/201777

(57) **Abstract**

The present application discloses a glass fiber sizing composition. The glass fiber sizing composition comprises effective components and water, and has a solid content of 4.0% to 6.0%; and the effective components comprise a silane coupling agent, a film former, a lubricant, a surfactant, a leveling agent, an interfacial reinforcing agent, a wetting agent, a defoaming agent, and a pH regulator, the solid mass of each effective component accounting for the total solid mass of the sizing composition expressed in percentage as follows: 6% to 26% of the silane coupling agent, 45% to 78% of the film former, 5% to 15% of the lubricant, 1% to 6% of the surfactant, 1% to 5% of the leveling agent, 1% to 6% of the interfacial reinforcing agent, 1% to 5% of the wetting agent, 1% to 5% of the defoaming agent, and 1% to 7% of the pH regulator. A glass fiber produced by the sizing composition has desirable strand integrity properties, softness and high dispersibility after a certain tension; the glass fiber also has high permeation velocity and complete permeation effect in the epoxy resin. The glass fiber shows excellent interfacial compatibility with the resin, and is suitable for weaving technology, especially for producing a heavy wind blade fabric. A composite formed by vacuum infusion of the fabric and the epoxy resin has desirable static mechanics and fatigue properties.

## Description

The present application claims priority to Chinese Patent Application No. 202210415238.5 filed to the China National Intellectual Property Administration (CNIPA) on April 20, 2022 and entitled "GLASS FIBER SIZING COMPOSITION, PREPARATION METHOD, GLASS FIBER PRODUCT AND USE THEREOF", which is incorporated herein by reference in its entirety.

### Technical Field

The present disclosure relates to the technical field of glass fiber sizing compositions, in particular to a glass fiber sizing composition, a preparation method, a glass fiber product and use thereof.

### Background

After entering a parity stage, the market competition of wind power has become more intense. All whole machine manufacturers and blade manufacturers are reducing costs and improving efficiency in various ways to maintain the healthy and stable development of the industry. There are two main approaches to reduce the cost of wind blades, one is to reduce the cost of raw materials, including the costs of resin, glass fiber, and core materials; the other is to improve an overall production efficiency to dilute the unit production cost.

In this context, some whole machine manufacturers at the forefront of industry research have proposed a comprehensive solution, namely heavy fabrics. There are two advantages of the heavy fabrics: (1) Improving laying efficiency, such that main girders of the same thickness can be reduced by 1/3 to 1/2, thus greatly shortening the laying time and reducing the cost of labor and mold occupation. (2) The content of glass fiber is significantly increased while the amount of resin is effectively reduced. The fibers in heavy fabrics are more densely arranged, and the amount of resin after infusion can be reduced by 2% to 3%.

Although having obvious cost and efficiency advantages, the heavy fabrics have extremely high technical requirements. These requirements are mainly for glass fiber sizing compositions. First of all, since the fiber arrangement of heavy fabrics is denser, the infusion speed of the resin may be affected after the laying is completed, and the infusion flow channels are reduced, leading to longer infusion time or even impermeability. Therefore, a better compatibility between the glass fiber sizing composition and the epoxy resin is required to increase an overall infusion speed, not affecting the overall infusion time, and to ensure that the main girders can be completely impregnated. Secondly, an increase in the glass fiber content after infusion of heavy fabrics will directly affect the fatigue properties of the main girder. Generally speaking, within a certain range, the higher the glass fiber content, the worse the fatigue properties. As a result, a redesign of the glass fiber sizing composition is required to ensure the fatigue properties of blades.

At present, there is no commercially-available sizing composition specifically for glass fiber heavy fabrics. Downstream customers are eager to launch special solutions for heavy wind power fabrics to meet the needs of industry development. Accordingly, designing a glass fiber suitable for heavy wind power fabrics can significantly improve and promote the development of the entire wind power industry. Meanwhile, this type of glass fiber has far-reaching influence and obvious significance for researches in the frontier field of new composites.

### Summary

The objective of the present disclosure is to provide a glass fiber sizing composition. A glass fiber produced by the glass fiber sizing composition has desirable strand integrity, softness and high dispersibility after a certain tension; the glass fiber also has fast and full wet-out in the epoxy resin. The glass fiber shows excellent interfacial compatibility with the resin, and is suitable for weaving technology, especially for producing a heavy fabric for wind blades. A composite formed by vacuum infusion of the fabric and the epoxy resin has desirable static mechanics and fatigue properties.

A first aspect of the present disclosure provides a glass fiber sizing composition, comprising effective components and water, and has a solid content of 4.0% to 6.0%. The effective components comprise a silane coupling agent, a film former, a lubricant, a surfactant, a leveling agent, an interfacial reinforcing agent, a wetting agent, a defoaming agent, and a pH regulator, and a solid mass of each effective component accounting for a total solid mass of the sizing composition are expressed in percentage as follows:

| | |
|---|---|
| silane coupling agent | 6% to 26%; |
| film former | 45% to 78%; |
| lubricant | 5% to 15%; |
| surfactant | 1% to 6%; |
| leveling agent | 1% to 5%; |
| interfacial reinforcing agent | 1% to 6%; |
| wetting agent | 1% to 5%; |
| defoaming agent | 1% to 5%; and |
| pH regulator | 1% to 7%. |

In some embodiments, the solid mass of each effective component accounting for the total solid mass of the sizing composition are expressed in percentage as follows:

| | |
|---|---|
| silane coupling agent | 7% to 25%; |
| film former | 50% to 75%; |
| lubricant | 7% to 14%; |
| surfactant | 1% to 5%; |
| leveling agent | 1% to 4%; |
| interfacial reinforcing agent | 1% to 5%; |
| wetting agent | 1% to 4%; |
| defoaming agent | 2% to 4%; and |
| pH regulator | 2% to 6%. |

In some embodiments, the solid mass of each effective component accounting for the total solid mass of the sizing composition are expressed in percentage as follows:

| | |
|---|---|
| silane coupling agent | 9% to 21%; |
| film former | 52% to 73%; |
| lubricant | 7% to 13%; |
| surfactant | 2% to 5%; |
| leveling agent | 2% to 4%; |
| interfacial reinforcing agent | 2% to 5%; |
| wetting agent | 2% to 4%; |
| defoaming agent | 2% to 3%; and |
| pH regulator | 2% to 6%. |

In some embodiments, the silane coupling agent is a mixture of a first silane coupling agent and a second silane coupling agent; the first silane coupling agent is an amino silane coupling agent, and the second silane coupling agent is an epoxy silane coupling agent.

In some embodiments, a mass ratio C1 of the first silane coupling agent to the second silane coupling agent is 1:5 to 1:3.

In some embodiments, the first silane coupling agent is aminopropyltriethoxysilane or/and γ-aminopropyltrimethoxysilane.

The second silane coupling agent is γ-glycidoxypropyltrimethoxysilane.

In some embodiments, the film former is a mixture of a first film former and a second film former; the first film former is a bisphenol A epoxy resin, and the second film former is a polyurethane resin.

In some embodiments, a mass ratio C2 of the first film former to the second film former is 1:1 to 2:1.

In some embodiments, the first film former is a bisphenol A epoxy resin with a molecular weight of 2000 to 3000.

In some embodiments, the second film former is a polyurethane resin with a molecular weight of 200 to 400.

In some embodiments, the first film former is a bisphenol A epoxy resin with a molecular weight of 2300 to 2700.

In some embodiments, the second film former is a polyurethane resin with a molecular weight of 250 to 350.

In some embodiments, the lubricant is a polyethyleneimine lubricant or/and a fatty amide and a derivative thereof.

In some embodiments, the surfactant is a pyrrolidone and a derivative or/and a pyridinium and a derivative.

In some embodiments, the defoaming agent is an organosilicone complex or/and a polyether defoaming agent.

In some embodiments, the leveling agent is a modified polyacrylate or/and a modified organosiloxane.

In some embodiments, the interfacial reinforcing agent is silica nanoparticles or/and alumina nanoparticles.

In some embodiments, the wetting agent is an acetylenic diol wetting agent or/and a modified polyoxyethylene derivative.

In some embodiments, the pH regulator is glacial acetic acid or/and citric acid.

In some embodiments, the solid mass of each effective component accounting for the total solid mass of the sizing composition are expressed in percentage as follows:

| | |
|---|---|
| silane coupling agent | 10% to 16%; |
| film former | 55% to 72%; |
| lubricant | 7% to 12%; |
| surfactant | 2% to 4%; |
| leveling agent | 2% to 4%; |
| interfacial reinforcing agent | 2% to 4%; |
| wetting agent | 2% to 3%; |
| defoaming agent | 2% to 3%; and |
| pH regulator | 2% to 5%; |

Wherein, the silane coupling agent is a mixture of a first silane coupling agent and a second silane coupling agent, the first silane coupling agent is an amino silane coupling agent, and the second silane coupling agent is an epoxy silane coupling agent. The film former is a mixture of a first film former and a second film former, the first film former is a bisphenol A epoxy resin, and the second film former is a polyurethane resin. The lubricant is a polyethyleneimine lubricant or/and a fatty amide and a derivative thereof. The surfactant is a pyrrolidone and a derivative or/and a pyridinium and a derivative. The leveling agent is a modified polyacrylate or/and a modified organosiloxane. The interfacial reinforcing agent is silica nanoparticles or/and alumina nanoparticles. The wetting agent is an acetylenic diol wetting agent or/and a modified polyoxyethylene derivative. The defoaming agent is an organosilicone complex or/and a polyether defoaming agent. The pH regulator is citric acid or/and glacial acetic acid.

In some embodiments, water in the sizing composition of the present disclosure is deionized water. The water in the sizing composition acts as a dispersion phase for each of the components.

A second aspect of the present disclosure provides a preparation method of the glass fiber sizing composition, comprising the following steps:
pre-dispersing the silane coupling agent: adding water at 30% to 45% of a total mass of the sizing composition into a container, then adding the pH regulator and the silane coupling agent in sequence to pre-disperse the silane coupling agent, and stirring until the mixed solution is clarified to obtain a solution of pre-dispersed silane coupling agent;
dilution of the film former, the lubricant, the surfactant, the leveling agent, the interfacial reinforcing agent, the wetting agent, and the defoaming agent: diluting the film former, the lubricant, the surfactant, the leveling agent, the interfacial reinforcing agent, the wetting agent, and the defoaming agent separately with water; and
adding the film former, lubricant, surfactant, leveling agent, interfacial reinforcing agent, wetting agent, and defoaming agent that are diluted into the solution of pre-dispersed silane coupling agent, adding the remainder of water, and stirring evenly to obtain the glass fiber sizing composition.

In some embodiments, the film former is diluted with water 3 to 4 times its mass; the interfacial reinforcing agent is dispersed with water 5 to 8 times its mass; and the defoaming agent is diluted with water 3 to 5 times its mass.

In some embodiments, the lubricant is diluted with warm water at 45°C to 60°C, 5 to 6 times its mass; the surfactant is diluted with warm water at 45°C to 60°C, 4 to 6 times its mass; the interfacial reinforcing agent is diluted with warm water at 45°C to 60°C, 4 to 6 times its; and the wetting agent is diluted with warm water at 45°C to 60°C and 5 to 6 times its mass.

The pre-dispersion of the silane coupling agent, and the dilution of the film former, the lubricant, the surfactant, the leveling agent, the interfacial reinforcing agent, the wetting agent, and the defoaming agent are conducted in any order of sequence. The pre-dispersion of the silane coupling agent is conducted first. Alternatively, the dilution of the film former, the lubricant, the surfactant, the leveling agent, the interfacial reinforcing agent, the wetting agent, and the defoaming agent is conducted first. Alternatively, the above two steps are conducted simultaneously.

A third aspect of the present disclosure provides a glass fiber product produced by coating with the glass fiber sizing composition.

A fourth aspect of the present disclosure provides use of the glass fiber product produced by coating with the glass fiber sizing composition in an epoxy resin composite material.

A fifth aspect of the present disclosure provides use of the epoxy resin composite in the field of wind power.

### Detailed Description

In order to make the objectives, technical solutions and advantages of the embodiments of the present disclosure clearer, the following will provide a clear and complete description of the technical solution of the present application in conjunction with the specific embodiments. Obviously, the described embodiments are merely some rather than all of the embodiments of the present disclosure. All other embodiments obtained by one skilled in the art based on the embodiments of the application without creative efforts should fall within the protection scope of the present application. What needs to be made clear is that, as long as there is no conflict, the embodiments in the present application and features in the embodiments can be arbitrarily combined with each other.

The glass fiber sizing composition provided in some embodiments of the present application comprises effective components and water, and has a solid content of 4.0% to 6.0%; and the effective components comprise a silane coupling agent, a film former, a lubricant, a surfactant, a leveling agent, an interfacial reinforcing agent, a wetting agent, a defoaming agent, and a pH regulator, and the solid mass of each effective component accounting for the total solid mass of the sizing composition are expressed in percentage as follows: 6% to 26% of the silane coupling agent, 45% to 78% of the film former, 5% to 15% of the lubricant, 1% to 6% of the surfactant, 1% to 5% of the leveling agent, 1% to 6% of the interfacial reinforcing agent, 1% to 5% of the wetting agent, 1% to 5% of the defoaming agent, and 1% to 7% of the pH regulator.

Silane coupling agent is one of the most reactive raw materials in a sizing composition system. The silanol groups formed after hydrolysis has high activity and can react with the silanol groups on the surface of the glass fiber to form Si-O-Si bonds. In the glass fiber sizing composition system, the silane coupling agent mainly plays two roles: (1) In the process of glass fiber drawing and forming, due to a high traction speed, surface micro-cracks will be formed during the rapid transformation of glass fiber from liquid to solid. The silanol groups of the silane coupling agent can well compensate for these micro-cracks by reacting with the silanol groups on the surface of the glass fiber, thus ensuring normal drawing of the glass fiber. (2) The silane coupling agent serves as a "bridge" between the glass fiber and the resin. The R groups of the silane coupling agent can react with the functional groups on the matrix resin, while the silanol groups can combine with the silanol groups on the glass fiber. Therefore, the silane coupling agent is one of the key factors determining the strength of fiber reinforced plastic (FRP) products. Choosing a suitable silane coupling agent can not only improve the performance of glass fiber itself and the mechanical properties of subsequently prepared FRP products, but also reduce the production cost of the glass fiber. When preparing the glass fiber sizing composition, the dosage of the silane coupling agent should be controlled within a certain range. If the dosage of silane coupling agent is too low, the glass fiber drawing and the performance of the composite will be affected due to insufficient active groups. If the dosage of silane coupling agent is too high, a part of the silane coupling agent will be wasted and the cost is increased. In some embodiments of the present application, the percentage of the solid mass of the silane coupling agent in the total solid mass of the sizing composition can be 6% to 26%, or 7% to 25%, or 9% to 21%, or 10% to 16%.

In some embodiments, the silane coupling agent can be a mixture of a first silane coupling agent and a second silane coupling agent; the first silane coupling agent can be an amino silane coupling agent, and the second silane coupling agent can be an epoxy silane coupling agent. The amino silane coupling agent contains amino groups and has extremely high reactivity. It can not only react with the film former in the drying process to ensure the overall strand integrity of the glass fiber, but also quickly react with the epoxy resin in the subsequent processing to form a highly stable chemical bond, thus enhancing the interface bonding between the glass fiber and the epoxy resin, and improving mechanical properties of the composite materials. The R group in the epoxy silane coupling agent is an epoxy group, which can ensure that the glass fiber can quickly be wet out in the epoxy resin during the subsequent preparation of the composite materials due to the principle of "like dissolves like". In the present disclosure, when the first silane coupling agent is an amino silane coupling agent, and the second silane coupling agent is an epoxy silane coupling agent, a ratio of the amino silane coupling agent to the epoxy silane coupling agent will also affect the property of the glass fiber. If there is too much amino silane coupling agent, the glass fiber will have excessively high strand integrity and hardness, which are not conducive to permeation. Although an excessive amount of epoxy silane coupling agent is conducive to the impregnation of epoxy resin into glass fibers, an insufficient amount of amino silane coupling agent may not only cause insufficient strand integrity performance and lead to loose filaments, but also affect the mechanical properties of the composite materials. In some embodiments of the present application, the mass ratio C1 of the amino silane coupling agent to the epoxy silane coupling agent can be controlled to 1:5 to 1:3, or 1:4.3 to 1:3.7. Specifically, when the mass ratio C1 of the amino silane coupling agent to the epoxy silane coupling agent is 1:4, the glass fiber produced by the sizing composition prepared in conjunction with other components has properties that can meet the requirements very well.

In some embodiments, the first silane coupling agent can be aminopropyltriethoxysilane or/and γ-aminopropyltrimethoxysilane. In some embodiments, the second silane coupling agent can be γ-glycidoxypropyltrimethoxysilane.

Film former is the most important component in the sizing composition and also accounts for the largest proportion. It can not only determine the forming process, integrity properties, softness, and abrasion resistance of glass fibers, but also affect the dispersion and smoothness of subsequent processing. In addition, the film former is also one of the key factors for the interface bonding between the glass fiber and the matrix resin. In the actual production of glass fibers, the dosage of the film former needs to be controlled within an appropriate range. Researches have shown that insufficient film former content may lead to problems in sizing composition coating, which cannot ensure that the sizing composition effectively protects the glass fiber, thereby affecting the process performance and mechanical properties of the glass fiber. If the content of the film former is too much, the integrity properties of the strands will be too high, and not easy to disperse, and the increase of fuzz as a result is not conducive to the permeation of resin. In some embodiments, the percentage of the solid mass of the film former in the total solid mass of the sizing composition may be 45% to 78%, 50% to 75%, 52% to 73%, or 55% to 72%. Within the above ranges, the film former can not only ensure desirable dispersion and softness of the glass fiber, but also ensure a smooth process of the glass fiber, compatibility with the matrix resin, and mechanical properties of the composite materials.

In some embodiments, the film former may be a mixture of a first film former and a second film former. The first film former may be a bisphenol A epoxy resin, and the second film former may be a polyurethane resin. In some embodiments, the first film former can be a bisphenol A epoxy resin with a relatively large molecular weight, specifically a bisphenol A epoxy resin with a molecular weight of 2000 to 3000, or a bisphenol A epoxy resin with a molecular weight of 2300 to 2700. The epoxy resin with a relatively large molecular weight can ensure film-forming properties of the sizing composition. In some embodiments, the second film former may be a polyurethane resin with a relatively small molecular weight, specifically a polyurethane resin with a molecular weight of 200 to 400, a polyurethane resin with a molecular weight of 250 to 400, or a polyurethane resin with a molecular weight of 250 to 350. The polyurethane resin with a relatively small molecular weight can ensure that the glass fiber can be easily dispersed after being subjected to tension, so as to ensure the impregnation performance and interfacial bonding. Meanwhile, the dosages of the two film formers need to be strictly controlled. If the dosage of the first film former is too high, it will lead to excessively high integrity properties, and the strands cannot be easily impregnated by resin. If the dosage of the second film former is too high, the strands may be too soft and are prone to loose filaments, thereby affecting the subsequent use performance. In some embodiments, the mass ratio C2 of the first film former to the second film former can be controlled to be 1:1 to 2:1. When the mass ratio C2 of the first film former to the second film former is 1:1 to 2:1, all properties of the prepared glass fiber can reach excellent levels.

In some embodiments, the silane coupling agent and the film former are at a mass ratio of 1:3 to 1:6. This not only ensures the film-forming and coating uniformity of the sizing composition, but also gives the sizing composition sufficient reactivity with the glass network and matrix resin.

Lubricant is one of the main components of the glass fiber sizing composition. The lubricant is mainly used to increase the wear resistance of the glass fiber, so as to ensure the smoothness of drawing and use. In the present disclosure, the lubricant may be a polyethyleneimine lubricant or/and a fatty amide and a derivative thereof. This type of lubricant has excellent dispersibility in water, shows a remarkable lubricating effect, and can effectively reduce fuzz. The fatty amide and the derivative thereof may comprise one or two selected from the group consisting of an alkoxy-modified fatty amide and a quaternized fatty amide. The dosage of the lubricant in glass fiber production should also be strictly controlled. If the dosage of lubricant is too low, it will affect the smoothness of drawing and use, and it is easy to cause problems such as fiber breakage during the fiber drawing and strand interruption during the subsequent use. However, too much lubricant can not only increase the cost, but also affect the manufacturability of glass fibers, because the excess lubricant is easy to adhere to the surface of the tension device during the use of glass fibers. As more lubricant is adhered, the adhesion increases, leading to strand bonding and strand breakage. In some embodiments, the percentage of the solid mass of the lubricant in the total solid mass of the sizing composition may be 5% to 15%, which can also be 7% to 14%, 7% to 13%, or 7% to 12%.

Surfactant mainly plays the role of stabilizing the components of the sizing composition due to its amphiphilicity. The sizing composition has complex components, and different components are prone to agglomeration or even precipitation after mixing, affecting the normal drawing and the uniformity of sizing composition coating. Adding an appropriate amount of surfactant can effectively solve the above related problems. In the present disclosure, the surfactant may be a pyrrolidone and a derivative thereof or/and a pyridinium and a derivative thereof. These substances have excellent amphiphilicity and are the most common surfactants in the industry, and can well ensure the stability of the sizing composition system. Moreover, if the dosage of surfactant in the sizing composition is too low, the sizing composition will settle, causing uneven surface coating, and ultimately affecting the performance of the glass fiber. If the dosage is too high and reaches a "saturation concentration", the excess part does not work and indirectly increase the production cost. Furthermore, most surfactants are charged, while the matrix resin is uncharged. Excessive charge concentration will affect the permeation of the resin to the glass fiber, such that there is a certain requirement for the dosage of surfactant. In some embodiments, the percentage of the solid mass of the surfactant in the total solid mass of the sizing composition may be 1% to 6%, which can also be 1% to 5%, 2% to 5%, or 2% to 4%.

Leveling agent can effectively reduce the surface tension and improve the overall permeability of the sizing composition, thereby increasing the rate at which the epoxy resin permeates the glass fiber. In addition, the leveling agent can increase the coverage of the sizing composition, such that a flat, smooth, and uniform coating will be formed during the film formation of the sizing composition, thereby indirectly strengthening the interface bonding between the glass fiber and the epoxy resin. In the present disclosure, the leveling agent may be a polyacrylate or/and an organosiloxane leveling agent. These two leveling agents can not only promote the flowing and leveling of the coating, but also do not affect the interlayer adhesion of the coating. Moreover, the two leveling agents further have a partial defoaming effect. The polyacrylate can comprise one or two selected from the group consisting of an epoxy-modified polyacrylate and an amino-modified polyacrylate; and the organosiloxane leveling agent can comprise one or two selected from the group consisting of epoxy- and polyether-modified copolymers, as well as epoxy- and polyester-modified copolymers. Meanwhile, it is necessary to strictly control the dosage of leveling agent, as too much or too little leveling agent will have adverse effects. Too much leveling agent, exceeding a saturation concentration, will increase the cost of the sizing composition. If the dosage of leveling agent is too low, the surface tension cannot be effectively reduced, resulting in unguaranteed coverage uniformity of the sizing composition, thus fundamentally affecting the permeability of the glass fiber. In some embodiments, the percentage of the solid mass of the leveling agent in the total solid mass of the sizing composition may be 1% to 5%, 1% to 4%, or 2% to 4%.

In the present disclosure, the use of the interfacial reinforcing agent is also one of the key technical points. Due to a high content of glass fiber in heavy fabrics after infusion, the fatigue resistance of composite materials tends to decrease significantly. Therefore, it is necessary to introduce an additive that can improve interface bonding to enhance fatigue performance, and interfacial reinforcing agents can play a similar role. The interfacial reinforcing agent of the present disclosure can be silica nanoparticles or/and alumina nanoparticles. Specifically, the interfacial reinforcing agent of the present disclosure is the nano-scale silica particles. The surface of silica contains a large amount of silanol groups. On one hand, silica can react with the silanol groups in the glass fiber and the silane coupling agent; on the other hand, the silica can also participate in the reaction between epoxy resin and amine curing agent, and play an excellent connection role. In addition, the attachment of nano-scale silica can increase the specific surface area of the glass fiber, increase bonding sites between the glass fiber and epoxy resin, thereby improving the interface bonding and the mechanical and fatigue properties of a final composite product. Due to its small size, nano-scale silica has excellent dispersibility in water without additional treatment. The dosage of the silica interfacial reinforcing agent needs to be controlled within a certain range. In case of a low dosage, the specific surface area and binding sites do not increase much, and the interface bonding between the glass fiber and the resin may not be significantly enhanced. If the dosage is too high, there will be too many "protrusions" on the surface of the glass fiber, thereby affecting the wear resistance of the glass fiber, and then resulting in unsmooth drawing and increased fuzz. In some embodiments, the percentage of the solid mass of the interfacial reinforcing agent in the total solid mass of the sizing composition may be 1% to 6%, which can also be 1% to 5%, 2% to 5%, or 2% to 4%.

Another key point of the present disclosure is the use of wetting agents. The wetting agent can significantly reduce the surface tension of the sizing composition, accelerate the permeation and effect of the epoxy resin on the glass fiber, and strengthen the interfacial bonding between the glass fiber and the matrix resin, and thus improving the mechanical properties of the composite materials. The wetting agent can be an acetylenic diol wetting agent or/and a modified polyoxyethylene derivative; specifically, the wetting agent is the acetylenic diol wetting agent. The acetylenic diol wetting agent has excellent dispersibility, can reduce surface tension, and increase the adhesion of glass fiber and epoxy resin. At the same time, this type of wetting agent has its own low-foaming/defoaming function, which can effectively ensure the impregnating state of the glass fiber in epoxy resin. In addition, the dosage of the wetting agent needs to be controlled. If too much wetting agent is used, the wetting effect will be saturated and the cost will be high, which will lead to high cost of the sizing composition. In case of a low dosage, it will affect the wetting effect, thereby affecting the permeation speed and effect of glass fiber in the epoxy resin. In some embodiments, the percentage of the solid mass of the wetting agent in the total solid mass of the sizing composition may be 1% to 5%, which can also be 1% to 4%, 2% to 4%, or 2% to 3%.

Defoaming agent is mainly used to eliminate the air bubbles generated during the preparation and circulation of the glass fiber sizing composition. During the preparation and circulation of the glass fiber sizing composition, a large number of air bubbles will be generated due to the presence of emulsifiers and surfactants. These air bubbles will affect the distribution of sizing composition on sizing application rollers, thereby affecting the uniformity of coating and the normal production. The defoaming agent can effectively prevent the generation of air bubbles and ensure the normal production of glass fibers. In the present disclosure, the defoaming agent can be an organosilicone complex or/and a polyether defoaming agent; specifically, the defoaming agent is the organosilicone complex. Moreover, the dosage of the defoaming agent needs to be controlled within a certain range. If the dosage of the defoaming agent is too high, the defoaming effect will be saturated, and the excess part will increase the cost. In case of a low dosage, the defoaming effect will not be obvious, affecting the permeation effect of glass fiber and epoxy resin. In some embodiments, the percentage of the solid mass of the defoaming agent in the total solid mass of the sizing composition may be 1% to 5%, 2% to 4%, or 2% to 3%.

It has been found through experiments that in the present disclosure, the film former, lubricant, surfactant, leveling agent, interfacial reinforcing agent, wetting agent, defoaming agent, and silane coupling agent are compatible in an appropriate content ratio, to obtain the glass fiber sizing composition. The produced glass fiber has desirable strand integrity, softness after a certain tension, and high dispersibility; the glass fiber also has a high permeation velocity and a complete permeation effect in the epoxy resin; the glass fiber shows excellent interfacial compatibility with the resin, and is suitable for weaving technology, especially for producing heavy wind blade fabrics. The composite material formed by vacuum infusion of the fabric and the epoxy resin has desirable static mechanics and fatigue properties.

In the present disclosure, the pH regulator is mainly used for hydrolyzing the silane coupling agent and regulating a pH value of the sizing composition, such that controlling the pH value of the sizing agent within the range of 6 to 7. The pH regulator may be glacial acetic acid or/and citric acid, specifically the glacial acetic acid. In some embodiments, the percentage of the solid mass of the pH regulator in the total solid mass of the sizing composition may be 1% to 7%, 2% to 6%, or 2% to 5%.

In some embodiments, the solid mass of each effective component accounting for the total solid mass of the sizing composition are expressed in percentage as follows: 7% to 25% of the silane coupling agent, 50% to 75% of the film former, 7% to 14% of the lubricant, 1% to 5% of the surfactant, 1% to 4% of the leveling agent, 1% to 5% of the interfacial reinforcing agent, 1% to 4% of the wetting agent, 2% to 4% of the defoaming agent, and 2% to 6% of the pH regulator.

In some embodiments, the solid mass of each effective component accounting for the total solid mass of the sizing composition are expressed in percentage as follows: 9% to 21% of the silane coupling agent, 52% to 73% of the film former, 7% to 13% of the lubricant, 2% to 5% of the surfactant, 2% to 4% of the leveling agent, 2% to 5% of the interfacial reinforcing agent, 2% to 4% of the wetting agent, 2% to 3% of the defoaming agent, and 2% to 6% of the pH regulator.

In some embodiments, the solid mass of each effective component accounting for the total solid mass of the sizing composition are expressed in percentage as follows: 10% to 16% of the silane coupling agent, 55% to 72% of the film former, 7% to 12% of the lubricant, 2% to 4% of the surfactant, 2% to 4% of the leveling agent, 2% to 4% of the interfacial reinforcing agent, 2% to 3% of the wetting agent, 2% to 3% of the defoaming agent, and 2% to 5% of the pH regulator.

In the glass fiber sizing composition provided by the present disclosure, the beneficial effects of selecting each component within the above content range will be illustrated by giving specific experimental data in examples.

The following are examples of preferred value ranges of each component contained in the glass fiber sizing composition according to the present disclosure.

### Preferred Example 1

A glass fiber sizing composition comprises effective components and water, and has a solid content of 4.0% to 6.0%; and the effective components comprise a silane coupling agent, a film former, a lubricant, a surfactant, a leveling agent, an interfacial reinforcing agent, a wetting agent, a defoaming agent, and a pH regulator, and the solid mass of each effective component accounting for the total solid mass of the sizing composition are expressed in percentage as follows:

| | |
|---|---|
| silane coupling agent | 6% to 26%; |
| film former | 45% to 78%; |
| lubricant | 5% to 15%; |
| surfactant | 1% to 6%; |
| leveling agent | 1% to 5%; |
| interfacial reinforcing agent | 1% to 6%; |
| wetting agent | 1% to 5%; |
| defoaming agent | 1% to 5%; and |
| pH regulator | 1% to 7%; |

wherein the silane coupling agent is a mixture of a first silane coupling agent and a second silane coupling agent; the first silane coupling agent is an amino silane coupling agent, and the second silane coupling agent is an epoxy silane coupling agent.

### Preferred Example 2

A glass fiber sizing composition comprises effective components and water, and has a solid content of 4.0% to 6.0%; and the effective components comprise a silane coupling agent, a film former, a lubricant, a surfactant, a leveling agent, an interfacial reinforcing agent, a wetting agent, a defoaming agent, and a pH regulator, and the solid mass of each effective component accounting for the total solid mass of the sizing composition are expressed in percentage as follows:

| | |
|---|---|
| silane coupling agent | 6% to 26%; |
| film former | 45% to 78%; |
| lubricant | 5% to 15%; |
| surfactant | 1% to 6%; |
| leveling agent | 1% to 5%; |
| interfacial reinforcing agent | 1% to 6%; |
| wetting agent | 1% to 5%; |
| defoaming agent | 1% to 5%; and |
| pH regulator | 1% to 7%; |

wherein the film former is a mixture of a first film former and a second film former; the first film former is a bisphenol A epoxy resin, and the second film former is a polyurethane resin.

### Preferred Example 3

A glass fiber sizing composition comprises effective components and water, and has a solid content of 4.0% to 6.0%; and the effective components comprise a silane coupling agent, a film former, a lubricant, a surfactant, a leveling agent, an interfacial reinforcing agent, a wetting agent, a defoaming agent, and a pH regulator, and the solid mass of each effective component accounting for the total solid mass of the sizing composition are expressed in percentage as follows:

| | |
|---|---|
| silane coupling agent | 6% to 26%; |
| film former | 45% to 78%; |
| lubricant | 5% to 15%; |
| surfactant | 1% to 6%; |
| leveling agent | 1% to 5%; |
| interfacial reinforcing agent | 1% to 6%; |
| wetting agent | 1% to 5%; |
| defoaming agent | 1% to 5%; and |
| pH regulator | 1% to 7%; |

wherein the silane coupling agent is a mixture of a first silane coupling agent and a second silane coupling agent; the first silane coupling agent is an amino silane coupling agent, and the second silane coupling agent is an epoxy silane coupling agent. The film former is a mixture of a first film former and a second film former; the first film former is a bisphenol A epoxy resin, and the second film former is a polyurethane resin.

### Preferred Example 4

A glass fiber sizing composition comprises effective components and water, and has a solid content of 4.0% to 6.0%; and the effective components comprise a silane coupling agent, a film former, a lubricant, a surfactant, a leveling agent, an interfacial reinforcing agent, a wetting agent, a defoaming agent, and a pH regulator, and the solid mass of each effective component accounting for the total solid mass of the sizing composition are expressed in percentage as follows:

| | |
|---|---|
| silane coupling agent | 6% to 26%; |
| film former | 45% to 78%; |
| lubricant | 5% to 15%; |
| surfactant | 1% to 6%; |
| leveling agent | 1% to 5%; |
| interfacial reinforcing agent | 1% to 6%; |
| wetting agent | 1% to 5%; |
| defoaming agent | 1% to 5%; and |
| pH regulator | 1% to 7%; |

wherein the lubricant is a polyethyleneimine lubricant; the surfactant is a polypyrrolidone surfactant; the leveling agent is a modified polyacrylate; the interfacial reinforcing agent is silica nanoparticles; the wetting agent is an acetylenic diol wetting agent; the defoaming agent is an organosilicone complex; the pH regulator comprises acetic acid or/and citric acid.

### Preferred Example 5

A glass fiber sizing composition comprises effective components and water, and has a solid content of 4.0% to 6.0%; and the effective components comprise a silane coupling agent, a film former, a lubricant, a surfactant, a leveling agent, an interfacial reinforcing agent, a wetting agent, a defoaming agent, and a pH regulator, and the solid mass of each effective component accounting for the total solid mass of the sizing composition are expressed in percentage as follows:

| | |
|---|---|
| silane coupling agent | 6% to 26%; |
| film former | 45% to 78%; |
| lubricant | 5% to 15%; |
| surfactant | 1% to 6%; |
| leveling agent | 1% to 5%; |
| interfacial reinforcing agent | 1% to 6%; |
| wetting agent | 1% to 5%; |
| defoaming agent | 1% to 5%; and |
| pH regulator | 1% to 7%; |

wherein the silane coupling agent is a mixture of a first silane coupling agent and a second silane coupling agent, the first silane coupling agent is an amino silane coupling agent, and the second silane coupling agent is an epoxy silane coupling agent; the film former is a mixture of a first film former and a second film former, the first film former is a bisphenol A epoxy resin, and the second film former is a polyurethane resin; the lubricant is a polyethyleneimine lubricant or/and a fatty amide and a derivative thereof; the surfactant is a pyrrolidone and a derivative or/and a pyridinium and a derivative. The leveling agent is a modified polyacrylate or/and a modified organosiloxane, the interfacial reinforcing agent is silica nanoparticles or/and alumina nanoparticles; the wetting agent is an acetylenic diol wetting agent or/and a modified polyoxyethylene derivative; the defoaming agent is an organosilicone complex or/and a polyether defoaming agent; the pH regulator is citric acid or/and glacial acetic acid.

### Preferred Example 6

A glass fiber sizing composition comprises effective components and water, and has a solid content of 4.0% to 6.0%; and the effective components comprise a silane coupling agent, a film former, a lubricant, a surfactant, a leveling agent, an interfacial reinforcing agent, a wetting agent, a defoaming agent, and a pH regulator, and the solid mass of each effective component accounting for the total solid mass of the sizing composition are expressed in percentage as follows:

| | |
|---|---|
| silane coupling agent | 6% to 26%; |
| film former | 45% to 78%; |
| lubricant | 5% to 15%; |
| surfactant | 1% to 6%; |
| leveling agent | 1% to 5%; |
| interfacial reinforcing agent | 1% to 6%; |
| wetting agent | 1% to 5%; |
| defoaming agent | 1% to 5%; and |
| pH regulator | 1% to 7%; |

wherein the silane coupling agent is a mixture of a first silane coupling agent and a second silane coupling agent; the first silane coupling agent is an amino silane coupling agent, and the second silane coupling agent is an epoxy silane coupling agent; the film former is a mixture of a first film former and a second film former; the first film former is a bisphenol A epoxy resin, and the second film former is a polyurethane resin; the mass ratio C1 of the first silane coupling agent to the second silane coupling agent is 1:5 to 1:3; and the mass ratio C2 of the first film former to the second film former is 1:1 to 2:1.

### Preferred Example 7

A glass fiber sizing composition comprises effective components and water, and has a solid content of 4.0% to 6.0%; and the effective components comprise a silane coupling agent, a film former, a lubricant, a surfactant, a leveling agent, an interfacial reinforcing agent, a wetting agent, a defoaming agent, and a pH regulator, and the solid mass of each effective component accounting for the total solid mass of the sizing composition are expressed in percentage as follows:

| | |
|---|---|
| silane coupling agent | 6% to 26%; |
| film former | 45% to 78%; |
| lubricant | 5% to 15%; |
| surfactant | 1% to 6%; |
| leveling agent | 1% to 5%; |
| interfacial reinforcing agent | 1% to 6%; |
| wetting agent | 1% to 5%; |
| defoaming agent | 1% to 5%; and |
| pH regulator | 1% to 7%; |

wherein the silane coupling agent is a mixture of a first silane coupling agent and a second silane coupling agent, the first silane coupling agent is an amino silane coupling agent, and the second silane coupling agent is an epoxy silane coupling agent. The film former is a mixture of a first film former and a second film former, the first film former is a bisphenol A epoxy resin, and the second film former is a polyurethane resin; the mass ratio C1 of the first silane coupling agent to the second silane coupling agent is 1:5 to 1:3; and the mass ratio C2 of the first film former to the second film former is 1:1 to 2:1; the lubricant is a polyethyleneimine lubricant or/and a fatty amide and a derivative thereof; the surfactant comprises a pyrrolidone and a derivative or/and a pyridinium and a derivative; the leveling agent is a modified polyacrylate or/and a modified organosiloxane; the interfacial reinforcing agent is silica nanoparticles or/and alumina nanoparticles; the wetting agent is an acetylenic diol wetting agent or/and a modified polyoxyethylene derivative; the defoaming agent is an organosilicone complex or/and a polyether defoaming agent; the pH regulator is citric acid or/and glacial acetic acid.

The preparation method of the glass fiber sizing compositions in Examples 1 to 7 comprises the following steps:
S1: adding water at 30% to 45% of a total mass of the sizing composition into a container, then adding the pH regulator and the silane coupling agent in sequence to pre-disperse the silane coupling agent, and stirring is conducted until the mixed solution is clarified to obtain a solution of pre-dispersed silane coupling agent;
S2: diluting the film former with water at 3 to 4 times its mass; diluting the lubricant with warm water at 55°C and 5 to 6 times its mass; diluting the surfactant with warm water at 55°C and 4 to 6 times its mass; diluting the leveling agent by stirring with warm water at 55°C and 4 to 6 times its mass; diluting the interfacial reinforcing agent with water at 5 to 8 times its mass; diluting the wetting agent with warm water at 55°C and 5 to 6 times its mass; and diluting the defoaming agent with water at 3 to 5 times its mass; and
S3: mixing the solution of pre-dispersed silane coupling agent, the film former, lubricant, surfactant, leveling agent, interfacial reinforcing agent, wetting agent, and defoaming agent that are diluted, adding the remainder of water, and stirring evenly to obtain the glass fiber sizing composition.

The specific formulations of some examples of the glass fiber sizing agent in the present application are shown in Table 1. The solid content of Examples 1-4 is 5.0%, the solid content of Examples 5-8 is 4.0%, the solid content of Examples 9-12 is 6.0%, the solid content of Example 13 is 4.5%, and the solid content of Example 14 is 5.5%. The values in Table 1 represent the percentage of the solid mass of each effective component in the total solid mass of the sizing agent, and the C1 value and C2 value are the ratios of the corresponding effective component solid mass percentage.

**Table 1 Ratios of each effective component of the sizing compositions of the examples**

| Component | | Example 1 | Example 2 | Example 3 | Example 4 | Example 5 | Example 6 |
|---|---|---|---|---|---|---|---|
| Silane coupling agent | Amino silane coupling agent | 5 | 3 | 4 | 2.5 | 3.5 | 1.5 |
| | Epoxy silane coupling agent | 21 | 12 | 13 | 9.5 | 11.5 | 4.5 |
| Film former | Bisphenol A epoxy resin | 30 | 35 | 33 | 36 | 39 | 46 |
| | Polyurethane resin | 15 | 25 | 22 | 22 | 21 | 27 |
| Lubricant | Polyethyleneimine lubricant | 10 | 0 | 7 | 3 | 0 | 5 |
| | Fatty amide and derivative thereof | 5 | 8 | 0 | 5 | 7 | 0 |
| Surfactant | Pyrrolidone and derivative thereof | 0 | 3 | 3 | 4 | 3 | 0 |
| | Pyridinium and derivative thereof | 1 | 0 | 3 | 0 | 0 | 2 |
| Leveling agent | Modified polyacrylate | 3 | 2 | 3 | 1 | 4 | 2 |
| | Modified organosiloxane leveling agent | 2 | 0 | 0 | 0 | 0 | 0 |
| Interfacial reinforcing agent | Silica nanoparticles | 1 | 3 | 2 | 6 | 0 | 3 |
| | Alumina nanoparticles | 0 | 0 | 0 | 0 | 3 | 0 |
| Wetting agent | Acetylenic diol wetting agent | 2 | 0 | 3 | 2 | 3 | 5 |
| | Modified polyoxyethylene derivative | 0 | 3 | 0 | 0 | 0 | 0 |
| Defoaming agent | Organosilicone complex | 3 | 3 | 0 | 2 | 2 | 1 |
| | Polyether defoaming agent | 0 | 0 | 3 | 0 | 0 | 2 |
| pH regulator | Glacial acetic acid | 2 | 1 | 4 | 7 | 3 | 1 |
| | Citric Acid | 0 | 2 | 0 | 0 | 0 | 0 |
| Total | | 100 | 100 | 100 | 100 | 100 | 100 |
| C1 | | 1:4.2 | 1:4 | 1:3.3 | 1:3.8 | 1:3.3 | 1:3 |
| C2 | | 2:1 | 1.4:1 | 1.5:1 | 1.6:1 | 1.9:1 | 1.7:1 |

**Table 1 (continued) Ratios of each effective component for sizing compositions of the examples**

| Component | | Example 7 | Example 8 | Example 9 | Example 10 | Example 11 | Example 12 |
|---|---|---|---|---|---|---|---|
| Silane coupling agent | Amino silane coupling agent | 5.5 | 2 | 4 | 4 | 3.5 | 5 |
| | Epoxy silane coupling agent | 20.5 | 6 | 13 | 12 | 12.5 | 16 |
| Film former | Bisphenol A epoxy resin | 45 | 0 | 39 | 36 | 42 | 35 |
| | Polyurethane resin | 0 | 78 | 24 | 21 | 23 | 29 |
| Lubricant | Polyethyleneimine lubricant | 8 | 6 | 5 | 4 | 0 | 0 |
| | Fatty amide and derivative thereof | 6 | 0 | 0 | 3 | 6 | 5 |
| Surfactant | Pyrrolidone and derivative thereof | 1 | 1 | 0 | 1 | 2 | 2 |
| | Pyridinium and derivative thereof | 0 | 0 | 3 | 2 | 0 | 0 |
| Leveling agent | Modified polyacrylate | 3 | 0 | 2 | 1 | 0 | 2 |
| | Modified organosiloxane leveling agent | 0 | 2 | 0 | 0 | 3 | 0 |
| Interfacial reinforcing agent | Silica nanoparticles | 2 | 1 | 3 | 2 | 0 | 2 |
| | Alumina nanoparticles | 2 | 0 | 0 | 0 | 1 | 0 |
| Wetting agent | Acetylenic diol wetting agent | 1 | 0 | 2 | 5 | 2 | 1 |
| | Modified polyoxyethylene derivative | 0 | 1 | 0 | 0 | 0 | 0 |
| Defoaming agent | Organosilicone complex | 5 | 1 | 1.5 | 2 | 0 | 1 |
| | Polyether defoaming agent | 0 | 0 | 0.5 | 0 | 1 | 0 |
| pH regulator | Glacial acetic acid | 1 | 2 | 3 | 7 | 0 | 2 |
| | Citric Acid | 0 | 0 | 0 | 0 | 4 | 0 |
| Total | | 100 | 100 | 100 | 100 | 100 | 100 |
| C1 | | 1:3.7 | 1:3 | 1:3.3 | 1:3 | 1:3.6 | 1:3.2 |
| C2 | | -- | 0 | 1.6:1 | 1.7:1 | 1.8:1 | 1.2:1 |

**Table 1 (continued) Ratios of each effective component for sizing compositions of the examples**

| Component | | Example 13 | Example 14 | Example 15 | Example 16 | Example 17 | Example 18 |
|---|---|---|---|---|---|---|---|
| Silane coupling agent | Amino silane coupling agent | 3 | 4 | 3 | 3 | 4 | 2.5 |
| | Epoxy silane coupling agent | 12.5 | 15 | 15 | 10 | 12 | 10.5 |
| Film former | Bisphenol A epoxy resin | 60 | 30 | 30 | 40 | 28 | 37 |
| | Polyurethane resin | 0 | 25 | 21 | 22 | 28 | 28 |
| Lubricant | Polyethyleneimine lubricant | 6 | 7 | 4 | 5 | 7 | 6 |
| | Fatty amide and derivative thereof | 0 | 0 | 9 | 2 | 6 | 3 |
| Surfactant | Pyrrolidone and derivative thereof | 3 | 2 | 1 | 2 | 1 | 1 |
| | Pyridinium and derivative thereof | 0 | 2 | 1 | 1 | 1.5 | 2 |
| Leveling agent | Modified polyacrylate | 2.5 | 2 | 3 | 2 | 1 | 1 |
| | Modified organosiloxane leveling agent | 0 | 0 | 1 | 1 | 2 | 1 |
| Interfacial reinforcing agent | Silica nanoparticles | 3 | 2 | 1 | 1 | 2 | 1 |
| | Alumina nanoparticles | 0 | 3 | 1 | 2 | 1 | 1 |
| Wetting agent | Acetylenic diol wetting agent | 3 | 2 | 1 | 2.5 | 1 | 1 |
| | Modified polyoxyethylene derivative | 0 | 0 | 2 | 0.5 | 0.5 | 1 |
| Defoaming agent | Organosilicone complex | 3 | 3 | 3 | 1 | 2 | 1 |
| | Polyether defoaming agent | 0 | 0 | 1 | 1 | 1 | 1 |
| pH regulator | Glacial acetic acid | 4 | 3 | 2 | 2 | 1 | 1 |
| | Citric Acid | 0 | 0 | 1 | 2 | 1 | 1 |
| Total | | 100 | 100 | 100 | 100 | 100 | 100 |
| C1 | | 1:4.2 | 1:3.8 | 1:5 | 1:3.3 | 1:3 | 1:4.2 |
| C2 | | -- | 1.2:1 | 1.4:1 | 1.8:1 | 1:1 | 1.3:2 |

In addition, one comparative example is used to facilitate the explanation of the technical solution of the present disclosure.

### Comparative Example 1

The sizing composition has a solid content of 5.5%. The solid mass of each effective component accounting for the total solid mass of the sizing composition are expressed in percentage as follows:

| | |
|---|---|
| amido silane coupling agent | 15.0%; |
| film former (epoxy resin) | 60.0%; |
| lubricant (fatty amide lubricant) | 8.0%; |
| surfactant (quaternary ammonium salt surfactant) | 3.0%; |
| defoaming agent (organosilicone complex) | 6.0%; and |
| pH regulator (citric acid) | 8.0%. |

The preparation method of Comparative Example 1 comprises the following steps:
(1) water at 30% to 45% of a total mass of the sizing composition is added into a container equipped with a variable speed stirrer, the pH regulator and the amido silane coupling agent are added in sequence, and stirred until the mixed solution is clarified;
(2) the film former is diluted with water at 3 to 5 times its mass and added into the container;
(3) the lubricant is diluted with water at 55°C and 4 to 6 times its mass and added into the container;
(4) the surfactant is diluted with water at 4 to 5 times its mass and added into the container;
(5) the defoaming agent is diluted with water at 3 to 5 times its mass and added into the container; and
(6) water is added as a supplement into the container, and stirred evenly to obtain a finished product.

Table 2 records the property testing results of the glass fiber sizing compositions of Examples 1 to 18 of the present disclosure and Comparative Example 1.

**Table 2 Property testing results of examples and comparative example**

| Item | Example 1 | Example 2 | Example 3 | Example 4 | Example 5 | Example 6 |
|---|---|---|---|---|---|---|
| Combustible content in product (wt%) | 0.50 | 0.51 | 0.51 | 0.53 | 0.46 | 0.48 |
| Fuzz (mg/kg) | 8.6 | 2.1 | 8.2 | 7.6 | 5.1 | 10.5 |
| Strand breaking strength (N/tex) | 0.54 | 0.61 | 0.55 | 0.57 | 0.53 | 0.59 |
| Strand state after tension | Loose | Extremely loose | Loose | Extremely loose | Loose | Loose |
| Epoxy fabric layup and impregnation time (min) | 31.3 | 25.6 | 38.7 | 28.2 | 33.5 | 39.8 |
| 90° tensile strength of epoxy fabric products (MPa) | 53.18 | 58.29 | 53.01 | 54.37 | 53.68 | 54.03 |
| Fatigue M value of epoxy fabric products | 10.2 | 11.1 | 10.4 | 10.7 | 9.8 | 10.0 |
| 40% stress fatigue cycles of epoxy fabric products (10000 times) | 211.34 | 293.56 | 203.18 | 188.43 | 256.38 | 216.18 |

**Table 2 (continued) Property testing results of examples and comparative example**

| Item | Example 7 | Example 8 | Example 9 | Example 10 | Example 11 | Example 12 |
|---|---|---|---|---|---|---|
| Combustible content in product (wt%) | 0.48 | 0.49 | 0.54 | 0.55 | 0.55 | 0.56 |
| Fuzz (mg/kg) | 8.6 | 1.3 | 8.8 | 9.4 | 4.7 | 6.7 |
| Strand breaking strength (N/tex) | 0.54 | 0.50 | 0.56 | 0.55 | 0.57 | 0.58 |
| Strand state after tension | Loose | Extremely loose | Extremely loose | Loose | Loose | Loose |
| Epoxy fabric layup and impregnation time (min) | 37.6 | 32.1 | 29.3 | 39.1 | 37.9 | 32.6 |
| 90° tensile strength of epoxy fabric products (MPa) | 55.26 | 52.11 | 54.13 | 52.28 | 55.33 | 52.68 |
| Fatigue M value of epoxy fabric products | 10.6 | 10.6 | 10.3 | 10.4 | 10.1 | 10.7 |
| 40% stress fatigue cycles of epoxy fabric products (10,000 times) | 180.89 | 246.83 | 211.49 | 201.10 | 234.69 | 180.11 |

**Table 2 (continued) Property testing results of examples and comparative example**

| Item | Example 13 | Example 14 | Example 15 | Example 16 | Example 17 | Example 18 | Comparative Example 1 |
|---|---|---|---|---|---|---|---|
| Combustible content in product (wt%) | 0.49 | 0.52 | 0.53 | 0.53 | 0.55 | 0.50 | 0.51 |
| Fuzz (mg/kg) | 6.4 | 2.7 | 3.1 | 3.6 | 2.8 | 2.9 | 15.6 |
| Strand breaking strength (N/tex) | 0.55 | 0.58 | 0.56 | 0.59 | 0.57 | 0.58 | 0.52 |
| Strand state after tension | Loose | Extremely loose | Extremely loose | Loose | Loose | Loose | Fair |
| Epoxy fabric layup and impregnation time (min) | 36.28 | 28.16 | 29.76 | 28.98 | 34.18 | 31.32 | 36.32 |
| 90° tensile strength of epoxy fabric products (MPa) | 54.32 | 58.58 | 55.38 | 56.17 | 58.32 | 54.15 | 50.38 |
| Fatigue M value of epoxy fabric products | 10.3 | 10.8 | 10.4 | 10.1 | 10.9 | 10.5 | 9.2 |
| 40% stress fatigue cycles of epoxy fabric products (10000 times) | 239.62 | 278.31 | 201.23 | 190.98 | 289.31 | 226.39 | 101.89 |

| | | | | | | | |
|---|---|---|---|---|---|---|---|
| Notes: (1) all data are tested based on 2400 tex strand and its unidirectional fabric; (2) 90° tensile strength is tested based on the ISO527-5 standard; and (3) fatigue properties are tested based on the ISO13003 standard. | | | | | | | |

It can be seen from the above examples that, through the selection of the types and the content design of each components of the sizing composition, the sizing composition formula that meets the requirements is obtained. Compared with Comparative Example 1, the glass fibers prepared in Examples 1 to 18 of the present disclosure have desirable properties. The glass fiber has less fuzz, loose strand after tension, soft strand texture, high impregnation speed in epoxy resin, and desirable interface bonding. The prepared composite shows excellent mechanical properties and fatigue properties.

In summary, a glass fiber produced by coating with this sizing composition has soft strands, excellent dispersion after a certain tension, fast and complete impregnation with epoxy resin, and highly desirable interface compatibility. The sizing composition is applicable to the weaving process, especially for the production of heavy wind blade substrates, and can effectively solve the problems of slow resin permeation and fatigue performance degradation of heavy fabrics. The composite material formed by vacuum infusion of the fabric prepared by this sizing composition and the epoxy resin has excellent mechanical properties and fatigue resistance.

It should be noted that, in the present disclosure, the solid mass of each effective component refers to the mass of non-aqueous substances in each effective component, and is not limited to solid components.

It should be noted that, in this text, the terms "comprise/comprising", "contain/containing" and any other variants thereof are non-exclusive, so that any process, method, object or device containing a series of elements contains not only such factors, but also other factors not listed clearly, or further contains inherent factors of the process, method, object or device. Without further restrictions, a factor defined by the statement "comprises/comprising an/a ...", "contain/containing an/a ..." or any other variants thereof does not exclude other identical factors in the process, method, object or device including said factors.

It should be noted that the foregoing embodiments are provided only for describing instead of limiting the technical solutions of the present disclosure. While particular embodiments of the disclosure have been shown and described, it will be obvious to one skilled in the art that modifications can be made to the technical solutions embodied by all the aforementioned embodiments, or that equivalent replacements can be made to some of the technical features embodied by all the aforementioned embodiments, without departing from the spirit and scope of the technical solutions of the present disclosure.

### Industrial Applicability

The present disclosure provides a glass fiber sizing composition. A glass fiber produced by using the glass fiber sizing composition has desirable strand integrity properties, softness and high dispersibility after a certain tension; the glass fiber also has an extremely high permeation velocity and a complete permeation effect in the epoxy resin. The glass fiber shows excellent interfacial compatibility with the resin, and is suitable for weaving technology, especially for producing a heavy wind blade fabric. A composite formed by vacuum infusion of the fabric and the epoxy resin has desirable static mechanics and fatigue properties.

## Claims

1. A glass fiber sizing composition, **characterized by** comprising effective components and water, and has a solid content of 4.0% to 6.0%; and the effective components comprise a silane coupling agent, a film former, a lubricant, a surfactant, a leveling agent, an interfacial reinforcing agent, a wetting agent, a defoaming agent, and a pH regulator, and a solid mass of each effective component accounting for a total solid mass of the sizing composition are expressed in percentage as follows:
| | |
|---|---|
| silane coupling agent | 6% to 26%; |
| film former | 45% to 78%; |
| lubricant | 5% to 15%; |
| surfactant | 1% to 6%; |
| leveling agent | 1% to 5%; |
| interfacial reinforcing agent | 1% to 6%; |
| wetting agent | 1% to 5%; |
| defoaming agent | 1% to 5%; and |
| pH regulator | 1% to 7%. |

2. The glass fiber sizing composition according to claim 1, wherein the solid mass of each effective component accounting for the total solid mass of the sizing composition are expressed in percentage as follows:
| | |
|---|---|
| silane coupling agent | 7% to 25%; |
| film former | 50% to 75%; |
| lubricant | 7% to 14%; |
| surfactant | 1% to 5%; |
| leveling agent | 1% to 4%; |
| interfacial reinforcing agent | 1% to 5%; |
| wetting agent | 1% to 4%; |
| defoaming agent | 2% to 4%; and |
| pH regulator | 2% to 6%. |

3. The glass fiber sizing composition according to claim 1, wherein the silane coupling agent is a mixture of a first silane coupling agent and a second silane coupling agent; the first silane coupling agent is an amino silane coupling agent, and the second silane coupling agent is an epoxy silane coupling agent.

4. The glass fiber sizing composition according to claim 3, wherein a mass ratio C1 of the first silane coupling agent to the second silane coupling agent is 1:5 to 1:3.

5. The glass fiber sizing composition according to claim 3, wherein the first silane coupling agent is aminopropyltriethoxysilane or/and γ-aminopropyltrimethoxysilane; and the second silane coupling agent is γ-glycidoxypropyltrimethoxysilane.

6. The glass fiber sizing composition according to claim 1, wherein the film former is a mixture of a first film former and a second film former; the first film former is a bisphenol A epoxy resin, and the second film former is a polyurethane resin.

7. The glass fiber sizing composition according to claim 6, wherein a mass ratio C2 of the first film former to the second film former is 1:1 to 2:1.

8. The glass fiber sizing composition according to claim 1, wherein the lubricant is a polyethyleneimine lubricant or/and a fatty amide and a derivative thereof; and the surfactant is a pyrrolidone and a derivative thereof or/and a pyridinium and a derivative thereof.

9. The glass fiber sizing composition according to claim 1, wherein the defoaming agent is an organosilicone complex or/and a polyether defoaming agent; and the leveling agent is a modified polyacrylate or/and a modified organosiloxane.

10. The glass fiber sizing composition according to claim 1, wherein the interfacial reinforcing agent is silica nanoparticles or/and alumina nanoparticles.

11. The glass fiber sizing composition according to claim 1, wherein the wetting agent is an acetylenic diol wetting agent or/and a modified polyoxyethylene derivative.

12. A preparation method of the glass fiber sizing composition according to any one of claims 1 to 11, **characterized by** comprising the following steps:
pre-dispersing the silane coupling agent: adding water at 30% to 45% of a total mass of the sizing composition into a container, then adding the pH regulator and the silane coupling agent in sequence to pre-disperse the silane coupling agent, and stirring until the mixed solution is clarified to obtain a solution of pre-dispersed silane coupling agent;
dilution of the film former, the lubricant, the surfactant, the leveling agent, the interfacial reinforcing agent, the wetting agent, and the defoaming agent: diluting the film former, the lubricant, the surfactant, the leveling agent, the interfacial reinforcing agent, the wetting agent, and the defoaming agent separately with water; and
adding the film former, lubricant, surfactant, leveling agent, interfacial reinforcing agent, wetting agent, and defoaming agent that are diluted into the solution of pre-dispersed silane coupling agent, adding the remainder of water, and stirring evenly to obtain the glass fiber sizing composition.

13. A glass fiber product produced by coating with the glass fiber sizing composition according to any one of claims 1 to 11.

14. Use of the glass fiber product according to claim 13 in an epoxy resin composite material.

15. Use of the epoxy resin composite material according to claim 14 in the field of wind power.
